# EUROPEAN PATENT APPLICATION

(11) **EP 1 174 638 A1**
(43) Date of publication of application: **23.01.2002**
(21) Application number: 01306217.9
(22) Date of filing: 19.07.2001
(51) Int. Cl.: F16G 13/04

(54) **Small pitch silent chain with freely rotating pins having wear resistant coating**

(30) Priority: 20.07.2000 US 219566 P
(71) Applicant: BorgWarner Inc., Troy, Michigan 48007-5060 (US)
(72) Inventor: Ledvina, Timothy J., Groton, NY 13073 (US)
(74) Representative: Lerwill, John

(57) **Abstract**

A small pitch silent chain for automotive vehicle or industrial drive applications having freely rotating pins. The chain includes interleaved rows of links (2,2') which are interconnected by cylindrical pins (3). The pins (3) are allowed to rotate freely with respect to the links (2,2'). Washers (4) press-fit to the ends of the pins (3) secure the pins (3) in the chain. The pins (3) are provided with a surface coating (5) of vanadium carbide or chromium carbide.

## Description

### BACKGROUND OF THE INVENTION

The present invention relates generally to low wear connecting pins for power transmission chain and, more particularly to a small pitch silent chain with freely rotating pins. The invention has application to the cylindrical pins used in power transmission chain having a wear resistant coating.

One type of chain is referred to as "silent chain." Such chain is formed in interleaved sets of inverted tooth links. A set or rank of links is assembled from several links positioned alongside of or adjacent to each other. Non-guide row links, which include inner links are conventionally alternated with guide row links, which include guide links positioned on the outer flanks of the link row. The links are connected by pivot means, which are typically round pins received in a pair of apertures formed at opposite ends of each of the links. An example of silent chain is found in U.S. Patent No. 4,342,560, which is incorporated herein by reference.

In chains of conventional construction where the pin is press fitted into the outside guide link of the chain, the pin is stationary relative to the guide link to which it is fitted. The pin is thus prevented from rotating in the guide link aperture. In a chain of this construction, the non-guide row links slide on the fixed pin as the chain articulates around the sprockets. This forces the wear on the pin to occur in one location only.

Typically, in order to increase the resistance to wear and reliability of power transmission chains, all high quality components of the chain, including the pins, are coated with a hard coating, carburized or case hardened. The carburizing process provides the parts with a hard, wear resistant surface. Other prior processes used to provide chain with increased wear resistance include nitriding, plating, nickel and hard chroming. Creation of a vanadium carbide layer upon the pins is a particularly effective means to provide steel pins with a hard, wear resistant surface while retaining the strength and ductile properties of the steel substrate.

There is a trend in automotive engine design to adapt very small pitch silent chains for use as the timing drive for overhead camshaft engines. These chains have pitches ranging from 6.35 mm. up to about 8.00 mm. that take up a minimum of space inside the front cover of an engine. This allows engine designs that are short in length, improving packaging of the engine in front wheel drive vehicles. The small pitch also results in smaller diameter sprockets that help engine designers develop engines with lower deck heights, resulting in lower vehicle hood lines for improved fuel economy.

The smaller pitch chain drives are also considerably lighter than the older chain drives of 9.525 or 12.5 mm. pitch that were traditionally used for timing drive applications. These smaller chains offer strength that is equal to or better than that of the older, larger pitch chains. Lastly, the new small pitch silent chains offered reduced noise levels, especially when they are compared to either small pitch roller chains or larger pitch silent chains.

When small pitch chains were first adapted for use in automotive engines, the chains that were used on motorcycle camshaft drives were first applied to automotive engines. These chains were found to be unsuitable for use due to a higher than acceptable rate of wear. Chain manufacturers attempted to improve the wear characteristics of small pitch chains by developing very thin, hard coatings for the pins, improving the surface finish of the pins, and improving the smoothness of the apertures of the links in which the pins were fitted. With these changes, the wear rates of the small pitch chains were improved and vehicle manufacturers began to adapt these chains to their engines because of the advantages noted above.

When a thin hard surface is used on the pin, there is a danger that the wear on the pin could result in the removal of the hard surface exposing the softer core of the pin. At this point, the chain may still be serviceable with as little wear as 0.2%. However, the chain wear would then accelerate as the surfaces of the link apertures continue to rub on the much softer material exposed beneath the surface of the pin. Typically, the hardness of the pin directly beneath the thin, hard coating would be 500 Hv. while the hardness of the coating itself is 1400 Hv. or higher. This can lead to either rapid wear of the chain or failure of the chain. This can be avoided by increasing the coating thickness, however, cost increases rapidly and thicknesses above 30 microns are prohibitively expensive with current manufacturing techniques.

Another problem can result from thin, hard coatings used on chain pins. As wear occurs on the surface of the pin, the surface can become rougher without necessarily wearing completely through the coating. At this point, the surface of the pin which is still very hard but now roughened, can rapidly abrade the mating surface resulting in very high wear in one joint of the chain. This mating surface could be a bushing in a roller chain or a link aperture or segmented bushing in a silent chain. When this occurs, there may be only one or two joints in the chain where the pin surface has become roughened and has initiated this run away wear phenomena. The overall chain wear may still be fairly low and the chain would continue to run without providing a warning of impending failure. When enough wear has occurred in the roughened joint of the chain to affect its structure, the chain could break causing severe engine damage similar to the failure of a timing belt.

Chains with freely rotating pins have been utilized for years in production. Both Morse Chain and Link-Belt produced commercial silent chains that contained free rotating pins and segmented bushings in the 1950's and 1960's in 0.375 in. and 0.500 in. pitch chains. While these chains had free rotating pins, they also contained carburized pins that had a hardness around 700 to 850 Vickers and a carburized case depth of 250 microns. This case depth was so thick that in practice the carburized layer was never worn through exposing the softer core below. The segmented bushings contacted the pin along their complete length which reduced the surface contact pressure in the chain joint compared to a chain design where the pins bore directly against the link apertures. In practice, the chains with free rotating pins and segmented bushings were replaced with fixed pin designs in production because the free rotation feature offered no improvement in wear at additional cost.

Morse TEC also used free rotating pins in a commercial chain sold to Chrysler Corporation for use on their 2.7L. V-6 engine. This chain is 0.375 in. pitch and uses pins of conventional hardness of 750 Vickers at the surface dropping to a value of 550 Vickers at a depth of 300 microns. In this application, the freely rotating pin has been found to reduce chain wear. However, the depth of hardness is so great that the wear on the surface of individual pins does not exceed the depth of hardened case on the pin and failure of the chain is avoided. Also, since the hardness of the pin is close to that of the surface of the link aperture, a pin whose surface becomes rougher due to wear will not cause run away abrasion of its mating surface.

Chain pins with thin, hard coatings were developed for use in roller chains in the late 1980's and commercially introduced to automotive production by several manufacturers. The increased surface hardness provided greater resistance to abrasion due to dirt and other debris in the oil than conventional carburized pins. The layer generally consisted of chromium carbide formed by a process called chromizing. The pins were press fitted into the pin links of the roller chain and were not free rotating.

These roller chains suffered a form of failure when minor wear of the very hard pin surface roughened the very fine surface finish used on these pins. The result was that the pins then rapidly wore through the carburized bushings resulting in failure of the chain. The solution to this problem was not to use freely rotating pins but to increase the chain width from one strand to two which reduced the bearing pressure in the chain joint by approximately 50%, at the sacrifice of requiring a much wider space required to package the chain.

Larger pitch silent chains were also introduced to the market with pins containing thin hard coating in the late 1980's by Daido Corporation. However, these chains were fixed pin designs with a pitch of 9.525 mm or larger and were sold only in the aftermarket where the service life is typically 50,000 km. They were never suitable for release for use in new vehicle production where the design life is required to be 160,000 km. or greater.

Smaller pitch silent chains were also sold to the market for motorcycle cam drive applications in the early 1990's that were fixed pin designs and contained pins with thin, hard coatings. These chains did not contain pins that were free to rotate. However, the design life for motorcycle engines is only 50,000 km. When chains of this type were applied to automotive engine use, the wear rate was too high and the design had to be upgraded through better processing and improved materials and harder coatings.

### SUMMARY OF THE INVENTION

The present invention includes as an embodiment a silent chain that is small in pitch (8 mm. or less) that has high durability (low wear) characteristics when applied to automotive timing drive engines in actual field service in vehicles. The chain contains freely rotating pins with a thin, hard coating with a surface hardness of 1400 Hv. or higher. The pins can have a hard surface layer formed of at least one metal carbide selected from vanadium carbide and chromium carbide, the hard layer being formed on the surface of the pins.

Original equipment automotive engines have a design life of 180,000 to 250,000 km. This means that the chain wear should not exceed 0.5% at the end of the design life. A timing drive should be designed so that the tensioner eliminates this chain slack caused by wear without running out of travel or the chain striking something inside the engine and becoming unduly noisy.

Small pitch silent chains are very desirable in a timing drive application because they offer good strength combined with low operating noise and are very compact and require little space to package in an engine. However, because the chain pitch is so short, there are many pitches or joints in the strand of the chain compared to chains of larger pitch. If the wear rate of the joint is the same as that of larger pitch chains, the overall wear of the chain will occur much more rapidly because of the larger number of wear surfaces in the chain strand. Also, the chain is more prone to jumping teeth if it is not carefully tensioned because the height of the sprocket tooth and the link flank that engages the sprocket tooth is much smaller in a chain with a smaller pitch length. This makes small pitch chains very sensitive to wear and great care must be taken to provide a chain with a very low wear rate if it is to achieve acceptable service life in automotive applications.

The present invention provides a small pitch silent chain with a freely rotating pin combined with a pin that utilizes a thin, hard coating so that wear is distributed over the complete pin surface. This has the practical effect of preventing the wearing through of the coating or surface layer thickness before the chain has reached the end of its serviceable life. Because the softer core of the pin is not exposed as a working surface, the wear rate of the chain remains stable for the life of the chain, preventing sudden, catastrophic failure of the chain. The pin retention members more particularly, has washers, press fitted onto the ends to retain the pin in the chain laterally. The washers do not prevent rotation of the pins. The ends of the pins are riveted in conventional fashion to help retain the washers on the pins.

Pins with a thin, hard coating or surface layer were chosen since the very high hardness of the surface layer can resist abrasion from dirt and other debris to a greater extent than the surface of a conventionally carburized pin. This hard layer can be composed of vanadium carbide, chromium carbide or some other composition. In practice, the typical thickness of the thin, hard coating is 10 microns. Greater coating thickness becomes increasingly expensive to produce with a practical limit of around 30 microns. Thicker coatings that have very high hardness are inherently brittle. They can be damaged due to bending of the pins during manufacture of the chain or in later service under high applied loads or impulsive loads if the chain is not tensioned properly. Therefore, it becomes critical to limit the wear on the surface of the pin so that the thin hard coating is not removed during normal rubbing action of the chain joint, exposing the much softer core of the pin.

Another advantage of the freely rotating pin is that the length of sliding between the pin and the link can be reduced by half compared to a fixed pin design. The links in the non-guide row and the guide row are both free to slide on the pin. In conventional fixed pin chains, only the non-guide row links can slide on the pins. Thus the length of sliding between the pin and link is R*(π/N) where R is the radius of the pin and N is the number of teeth in the sprocket that the chain is wrapping. In a chain with a freely rotating pin, the total sliding distance of the non-guide row link and guide row link on the surface of the pin is the same, but it is distributed across these two elements. If the friction is the same between these elements and the pin, both links should slide an equal amount on the pin, therefore reducing the local wear that develops on the pin. If the friction were higher on one of the interfaces, the pin would be biased to slide further on the interface with the lower friction, helping to reduce wear on the surface of the pin.

With chains containing freely rotating pins, wear accumulates in each row of the chain since the relative motion of the links of all rows sliding on the pin leads to surface removal and a permanent lengthening of the chain. If the rate of wear in the joint of the chain is proportional to the distance that the link slides on the pin, then the wear rate of the chain with freely rotating pins is expected to be equal to that of a conventional chain with fixed pins. This results because the sliding at each interface in the chain with free pin rotation is approximately half the level in the chain with fixed pins, but there are twice as many interfaces that increase the total chain elongation.

However, since there is less likelihood of the freely rotating pin being worn to the point that the thin hard surface layer is removed all around the pin, the service life of this chain under actual field conditions is expected to be several times greater than that of a chain with fixed pins with thin, hard coatings or surfaces.

### BRIEF DESCRIPTION OF THE DRAWINGS

A preferred embodiment of this invention is explained with reference to the attached drawings. In the drawings:

Figure 1 is a front view of a portion of a silent chain of the present invention.

Figure 2 is a plan view of the chain of Figure 1.

Figure 3 is an enlarged front view of the inside link of the chain.

Figure 4 is a perspective view of a portion of the chain that illustrates another embodiment of the retention pieces along the outside of the chain.

Figure 5 is an enlarged cross-sectional view of a pin showing the hardened surface layer.

Figure 6 is a front view of a portion of a silent chain of the present invention fitted with plasticity effect guide links.

Figure 7 is a plan view of the chain in figure 6.

Figure 8 is an enlarged front view of plasticity effect guide link of the chain.

### DETAILED DESCRIPTION OF THE PREFERRED EMBODIMENTS

The present invention includes a small pitch silent chain having freely rotating coated pins for automotive vehicle or industrial drive applications.

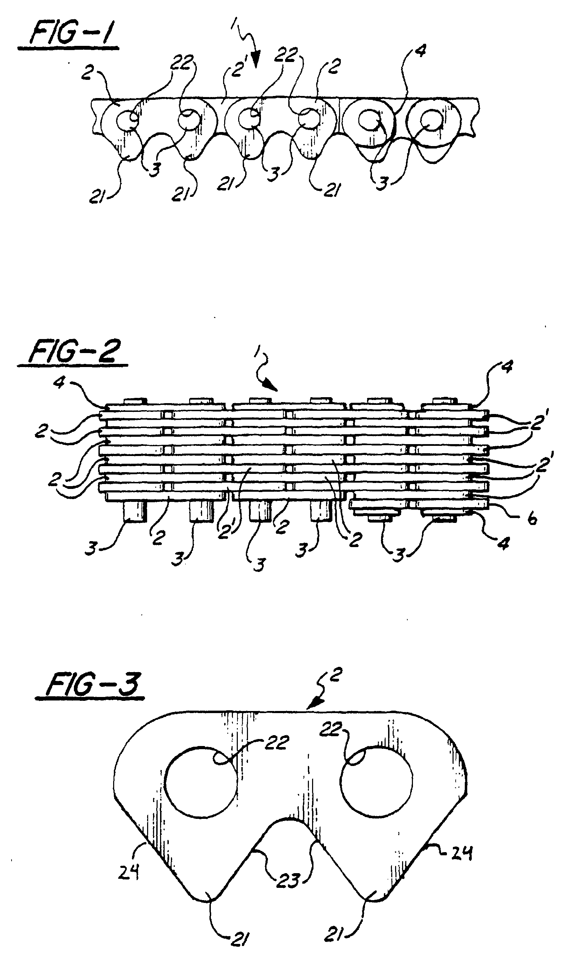

As shown in Figures 1 and 2, multiple link plates 2, each with a pair of depending teeth 21 and a pair of apertures, or pinholes 22, are placed in rows 2, 2' and interleaved to form silent chain 1. Link plates 2 are pivotally connected by inserting connecting pin 3 in pinhole 22 of these link plates 2. Retention members 4 are placed on the outermost side of link plate 2 in this silent chain.

Tooth 21 of link plate 2 is comprised of inside flank 23 and outside flank 24, as shown in Figure 3. Inside flank 23 has a nearly straight flat surface or slightly curved surface. Outside flank 24 has a nearly straight flat surface at the tip of tooth 21 and a convex surface in the vicinity of pinhole 22.

The chain is constructed of rows, sets or ranks of links, each set of links being joined to an adjacent set of links by cylindrical pivot means, i.e., round pins. The sets of links include interleaved rows. Each includes a plurality of inner or inside links. Each inside link consists of an inverted toothed link including a link body having a pair of spaced apertures to receive the pivot pins, and a pair of teeth depending from the link body. Each tooth has an outside flank and an inside flank meeting at a tip. Various configurations of the flanks are contemplated.

Each link row includes a plurality of inside links flanked on the outside of the link row by a guide link 6 and a retention member 4 that is press fit on the pin. In one embodiment, shown in Figure 1, the retention member is in the form of a washer that is press fit on the ends of the pins. The chain is retained on the sprockets by the presence of guide links 6 just inside the washers. The guide links 6 have clearance apertures to permit free rotation of the pins as do the inside links 2.

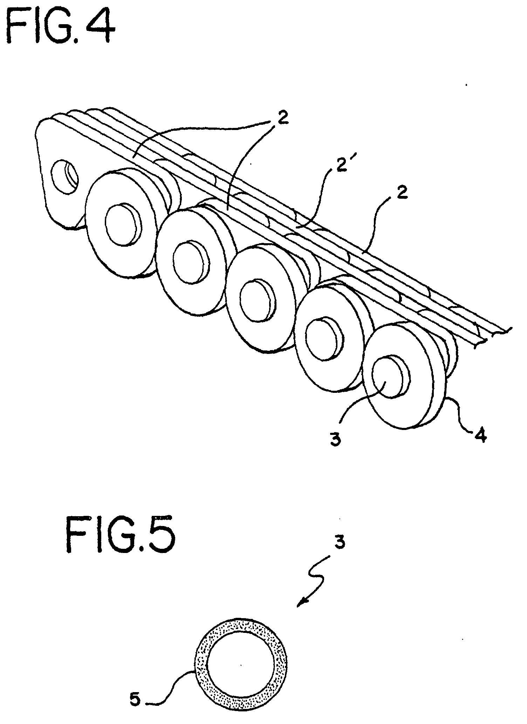

In another embodiment, shown in Figure 4, the retention member is of a size that is nearly equal to the height of the links. The retention members do not have a toothed configuration as they do not engage the teeth of an associated sprocket. Instead, the retention members are utilized to prevent lateral motion of the chain relative to the sprocket, eliminating the need for guide links. The retention members are provided with an apertures to receive the pins in such a manner to permit rotation of the pins relative to the apertures of all of the inside or inner links. At both ends of each pin, a retention member is press-fit on the pin to secure the pin in the chain.

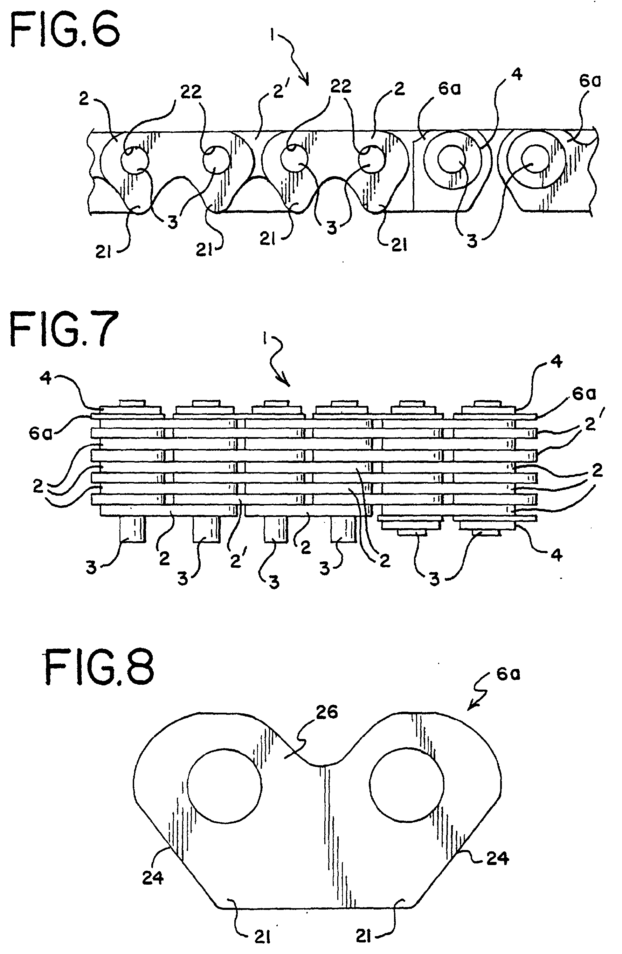

In another embodiment, shown in Figures 6 and 7, the conventional guide links have been replaced by guide links 6a that are designed to match the plastic deformation of the inside links during the prestress operation. This allows the pins remain as straight as possible after prestress. These guide links 6a are also approximately half of the thickness of the inner links so that the combined bearing area of the guide link and inside link apertures in the guide link row of the chain is substantially equal to the bearing area of the inside link apertures in the non-guide row of the chain. This improves the chances that the friction between the pins and link apertures under load will be equal between the guide rows and the non-guide rows of the chain. Under these circumstances, the articulation of the chain joint will be divided equally between the guide row and the non-guide row, helping to reduce the overall wear of the chain.

While the design intent of the chain is noted above, in the real world, slight deviations in dimensions of the actual parts will produce variations in the friction from row to row of the chain. This could also result from a variation in the amount of oil at the interface of the pin surface and link apertures and change with time. However, by balancing the bearing areas between the two rows, the chances of having one row with high friction and the other row with low friction should be minimized. In practice, the slight variations in friction that occur in the real world help provide the torque necessary for the rotation of the pins. This is especially true when the chain tension is low upon the start of articulation.

Figure 8 shows one shape of a plasticity effect guide link 6a with clearance apertures. Other designs are possible and are included by reference.

In the chain of the present invention the pitch (the distance measured from the center of a pin to the center of an adjacent pin, or the distance between the centers of the apertures of the links) is 8.00 mm or less. The pins are coated with a surface layer of vanadium carbide or chromium carbide which is no greater than 30 microns thick and at least 1400V (Vickers) in hardness. The technique of carburizing and coating of pins with surface coatings are well known in the art. An enlarged cross-section of the pin 3 is shown in Figure 5 to illustrate the hardened surface layer 5.

In operation, the chain of the present invention is typically wrapped around a driving sprocket and at least one driven sprocket, each sprocket having a plurality of equally spaced teeth. Since the pins are not securely fit to either inner or conventional guide links, the pins rotate freely with respect to all of the inner links. As a result of this construction, the pins are expected to wear more evenly about their circumference than in a comparative conventional chain with fixed pins.

While several embodiments of the invention are illustrated, it will be understood that the invention is not limited to these embodiments. Those skilled in the art to which the invention pertains may make modifications and other embodiments employing the principles of this invention, particularly upon considering the foregoing teachings.

## Claims

1. A silent chain comprising:
a plurality of interleaved rows of inner links, round pins connecting adjacent rows of inner links, each of said inner links having a pair of toes separated by a crotch, each of said inner links having a pair of apertures for receiving said pins, said pins being freely rotatable within said apertures of said inner links,
retention members located along the outside of said rows of inner links, said pins being press fit within said retention members to retain said pins within said apertures of said inner links, said retention members being rotatable relative to said apertures of said inner links,
said pins having a hard surface layer formed of at least one metal carbide selected from vanadium carbide and chromium carbide.

2. The silent chain of claim 1 wherein said inner links have a pitch distance, said pitch distance being the distance measured from the center of a link aperture to the center of an adjacent link aperture, said pitch distance being 8.00 mm or less.

3. The silent chain of claim 1 or 2 wherein pins are coated with a surface layer that is between 10 microns and 30 microns in thickness.

4. The silent chain of claim 1, 2 or 3 wherein said pins are coated with a surface layer that is at least 1400V (Vickers) in hardness.

5. The silent chain of any one of claims 1 to 4, wherein said rows of inner links include guide links located between the retention members and the outermost links of said rows of links, said guide links being positioned in alternate rows of said chain, said guide links being thinner than said inner links in the transverse direction of the chain, each of said guide links having a pair of apertures, said pins being freely rotatable within said apertures of said guide links.

6. The silent chain of claim 5 wherein the bearing area of the guide link and inner link apertures in the guide link row of the chain is substantially equal to that of the bearing area of the inner link apertures of the non-guide link row of the chain.

7. The silent chain of claim 5 or 6 wherein the guide links are designed to minimize the deformation of the pins during prestress such that the pins are substantially straight as the chain is placed into service for its intended purpose.

8. A silent chain comprising:
a plurality of interleaved rows of inner links, round pins connected adjacent row of inner links, the inner links each having a pair of toes separated by a crotch, and a pair of apertures in which the pins are freely rotatably received,
retention members along the outside of said rows of inner links, the pins being press fit with the retention members to retain said pins within the apertures of the inner links, said retention members being rotatable relative to said apertures of said inner links
said pins having a surface layer that is thin, preferably from 10 to 30 microns thick, and hard, preferably at least 1400 (Vickers) hardness.
